# EUROPÄISCHE PATENTSCHRIFT

(11) **EP 1 439 899 B1**
(45) Veröffentlichungstag und Bekanntmachung des Hinweises auf die Patenterteilung: **23.03.2005**
(21) Anmeldenummer: 02785296.1
(22) Anmeldetag: 24.10.2002
(51) Int. Cl.: B01F 17/00

(54) **BIOLOGISCH ABBAUBARE ZUSAMMENSETZUNGEN**
BIOLOGICALLY DEGRADABLE COMPOSITIONS
COMPOSITIONS BIODEGRADABLES

(30) Priorität: 02.11.2001 DE 10154103
(43) Veröffentlichungstag der Anmeldung: 28.07.2004
(73) Patentinhaber: Cognis Deutschland GmbH & Co. KG, 40589 Düsseldorf (DE)
(72) Erfinder: HELD, Uwe, 42553 Velbert (DE); BAUMANN, Carsten, 50933 Köln (DE); HELDT, Sandra, 40699 Erkrath (DE); SCHARES, Horst-Dieter, 40699 Erkrath (DE); WILLING, Andreas, 40699 Erkrath (DE)
(86) Internationale Anmeldenummer: PCT/EP2002/011901
(87) Internationale Veröffentlichungsnummer: WO 2003/037495

(56) Entgegenhaltungen:
- EP-A- 0 018 482
- AT-B- 336 555
- DE-A- 4 006 391
- DE-A- 19 731 880

## Beschreibung

### Gebiet der Erfindung

Die Erfindung betrifft biologisch gut abbaubare und toxikologisch unbedenkliche Zusammensetzungen. Dabei handelt es sich um Zusammensetzungen, die erhältlich sind indem man Gemische von Fettalkoholen mit 8 bis 22 C-Atomen und Ringöffnungsprodukte, die aus der Umsetzung von 1,2-Epoxyalkanen mit 8 bis 18 C-Atomen mit Ethylenglykol stammen, der Ethoxylierung unterwirft.

### Stand der Technik

Aus der **DE 28 29 697 C2** sind flüssige Detergenszusammensetzungen von Anlagerungsprodukten des Ethylenoxids an Fettalkoholen und Anlagerungsprodukten des Ethylenoxids an innenständige vicinale Alkandiole bekannt, die bei Wasserzugabe nicht gelieren.

Aus **DE 40 06 391 A1** sind gießbare, flüssige Tensidkonzentrate von nichtionischen Tensiden sowie deren Verwendung als Emulgatoren bei der Emulsionspolymerisation bekannt. Dabei enthalten die Tensidkonzentrate einerseits Anlagerungsprodukte von Ethylenoxid an primäre Alkohole, andererseits Umsetzungsprodukte von 5 bis 25 mol Ethylenoxid mit 1 mol aliphatischen vicinalen, endständigen Diolen.

**DE 197 31 880 A1** beschreibt ebenfalls gießbare, flüssige Tensidkonzentrate von nichtionischen Tensiden sowie deren Verwendung als Emulgatoren bei der Emulsionspolymerisation. Die Tensidkonzentrate sind ähnlich aufgebaut wie aus der oben genannten DE 40 06 391 bekannt, wobei jedoch die zweite Komponente (Umsetzungsprodukte von Ethylenoxid mit aliphatischen vicinalen, endständigen Diolen) einen höheren Ethoxylierungsgrad aufweist (30 bis 50).

### Beschreibung der Erfindung

Der vorliegenden Erfindung lag die Aufgabe zugrunde, Tensid-Zusammensetzungen bereitzustellen, die sich - allein oder in Abmischung mit anderen Tensiden ― als Emulgatoren für die Emulsionspolymerisation eignen. Diese Verbindungen sollten in der Darreichungsform gießbarer, flüssiger Tensidkonzentrate appliziert werden können. Bei der Verwendung als Emulgatoren für die Emulsionspolymerisation sollten Sie insbesondere bewirken, daß nur eine äußerst geringe Koagulatbildung erfolgt.

Ein wichtiger Aspekt der Aufgabenstellung bestand darin, daß die Zusammensetzungen toxkologisch unbedenklich sein sollten. Unter dem Begriff " toxkologisch unbedenklich" ist dabei zu verstehen, daß die aquatische Toxizität nach der Methode gemäß DIN 38412, Teil 9 (LC/EC-50-Wert) oberhalb von 1 mg/l beträgt und daß bezüglich der Toxizität nach der Methode gemäß OECD 423 ein LD-50-Wert oberhalb von 2000 mg/kg erzielt wird.

Dabei sollte die gute biologische Abbaubarkeit und die toxikologische Unbedenklichkeit nicht auf Kosten der anwendungstechnischen Eigenschaften gehen.

Eine weitere Aufgabe bestand darin, Zusammensetzungen bereitzustellen, die beim Einsatz als Emulgatoren bei der Emulsionspolymerisation zu Polymerdispersionen (wäßrigen Latices) mit einer guten Gefrier-Tau-Stabilität führen.

Eine weitere Aufgabe bestand darin, Zusammensetzungen bereitzustellen, die beim Einsatz als Emulgatoren bei der Emulsionspolymerisation zu Polymerdispersionen (wäßrigen Latices) mit einer guten Elektrolytstabilität führen.

Gegenstand der vorliegenden Erfindung sind biologisch abbaubare Zusammensetzungen, die erhältlich sind durch Umsetzung eines Gemisches von
a) 20-80 Gew.-% ein oder mehrerer Fettalkohole mit 8 bis 22 C-Atomen und
b) 20-80 Gew.-% ein oder mehrerer Ringöffnungsprodukte von 1,2-Epoxyalkanen mit 8 bis 18 C-Atomen mit Ethylenglykol
mit Ethylenoxid, mit der Maßgabe, daß die Menge des eingesetzten Ethylenoxids 5 bis 100 mol bezogen auf ein mol an freien OH-Gruppen, die in der Summe der eingesetzten Verbindungen a) und b) vorhanden sind, beträgt.

Zu den bei der Ethoxylierung (gemeinsam) eingesetzten beiden Substanzklassen sei folgendes ausgeführt:
- Fettalkohole mit 8 bis 22 C-Atomen sind dem Fachmann bekannt. Sie können einzeln oder im Gemisch eingesetzt werden. Bevorzugt sind dabei weitgehend gesättigte und ungesättigte Fettalkohole, worunter solche Fettalkohole zu verstehen sind, deren Jodzahl unterhalb von 60 liegt. Als ganz besonders bevorzugt kommen folgende Fettalkohole in Betracht: Laurinalkohol, Myristinalkohol, Cetylalkohoi, Stearylalkohol und Oleylalkohol
- Ringöffnungsprodukte von 1,2-Epoxyalkanen mit 8 bis 18 C-Atomen mit Ethylenglykol sind auf einfache Weise zugänglich, indem man die gewünschten Epoxyalkane mit Ethylenglykol im Sinne einer Öffnung des Oxiranringes umsetzt.

Die (gemeinsame) Ethoxylierung der genannten beiden Substanzklassen erfolgt bei erhöhter Temperatur und erhöhtem Druck in Gegenwart von geeigneten Alkoxylierungskatalysatoren. Die Wahl des Alkoxylierungskatalysators beeinflußt die Breite des Spektrums von Anlagerungsprodukten, die sogenannte Homologenverteilung, des Ethylenoxids an den Alkohol. So werden in Gegenwart der katalytisch wirkenden Alkalimetallalkoholate wie Natriumethylat Anlagerungsprodukte mit breiter Homologenverteilung erhalten, während beispielsweise in Gegenwart von Hydrotalcit als Katalysator eine stark eingeengte Homologenverteilung (sogenannte "narrow range"-Produkte) erfolgt.

Überraschenderweise hat sich herausgestellt, daß die erfindungsgemäßen Zusammensetzungen besser biologisch abbaubar sind, als Zusammensetzungen, die man erhält, wenn man
- Ethoxylate von Fettalkoholen mit 8 bis 22 C-Atomen mit Ethoxylaten von Ringöffnungsprodukte von 1,2-Epoxyalkanen
- mit 8 bis 18 C-Atomen mit Ethylenglykol
mischt. Daraus ergibt sich, daß es sich bei den erfindungsgemäßen Zusammensetzungen um andere Zusammensetzungen handeln muß, als bei den letztgenannten Zusammensetzungen. Mit anderen Worten: Die erfindungsgemäßen Zusammensetzungen, die in einem 1-stufigen Prozeß durch Ethoxylierung eines Gemisches von zwei Rohstoffklassen erhältlich sind, zeichnen sich durch signifikant bessere biologische Abbaubarkeit aus, als Zusammensetzungen, bei denen die beiden Rohstoffklassen jeweils getrennt voneinander ethoxyliert werden, wozu selbstverständlich zwei Prozesse durchzuführen sind, und die Ethoxylate dann miteinander gemischt werden. Es hat sich ferner herausgestellt, daß die erfindungsgemäßen Zusammensetzungen sich auch durch gute toxikologische Werte auszeichnen.

Überraschenderweise hat sich ferner herausgestellt, daß wäßrige Latices auf Basis der erfindungsgemäßen Zusammensetzungen bessere Gefrier-Tau-Stabilitäten und bessere Elektrolytstabilitäten aufweisen als Zusammensetzungen, die man erhält, wenn man
- Ethoxylate von Fettalkoholen mit 8 bis 22 C-Atomen mit Ethoxylaten von Ringöffnungsprodukte von 1,2-Epoxyalkanen
- mit 8 bis 18 C-Atomen mit Ethylenglykol mischt.

Ferner hat sich herausgestellt, daß Kunststoff-Filme, die ausgehend von wäßrigen Latices auf Basis der erfindungsgemäßen Zusammensetzungen hergestellt werden, bessere Blockfestigkeiten aufweisen als Kunststoff-Filme, die ausgehend von wäßrigen Latices auf Basis von Zusammensetzungen hergestellt werden, die man erhält, wenn man
- Ethoxylate von Fettalkoholen mit 8 bis 22 C-Atomen mit Ethoxylaten von Ringöffnungsprodukte von 1,2-Epoxyalkanen
- mit 8 bis 18 C-Atomen mit Ethylenglykol mischt.

Es sei darauf hingewiesen, daß DE-A 40 06 391 auf S. 3, Zeilen 22-25 zwar auf die Möglichkeit verweist, daß die Ethoxylierung in einem einzigen Reaktionsschritt erfolgen kann. Damit ist jedoch für den Fachmann nicht mehr offenbart als der Hinweis auf eben diese Herstellmöglichkeit. Über weitere nützliche Eigenschaften der so erhältlichen Zusammensetzungen schweigt sich DE-A 40 06 391 aus. Insbesondere gibt sie keinerlei Hinweise auf einen Einfluß des Herstellverfahrens auf die biologische Abbaubarkeit und die toxikologischen Eigenschaften der Produkte.

Darüber hinaus offenbart die genannte DE-A 40 06 391 nichts über die Verbesserung der Gefrier-Tau-Stabilität von wäßrigen Polymerdispersionen, die unter Einsatz der erfindungsgemäßen Zusammensetzungen erhältlich sind. Ebensowenig offenbart sie etwas über Elektrolytbeständigkeit von wäßrigen Polymerdispersionen, die unter Einsatz der erfindungsgemäßen Zusammensetzungen erhältlich sind oder die Eignung der erfindungsgemäßen Zusammensetzungen zur Herstellung von blockfesten Kunststoff-Filmen.

Die erfindungsgemäßen Zusammensetzungen können als alleinige Emulgatoren (Primäremulgatoren) bei der Emulsionspolymerisation eingesetzt werden. Es ist jedoch auch möglich, die erfindungsgemäßen Zusammensetzungen zusammen mit anionaktiven, (weiteren) nichtioischen oder kationaktiven Emulgatoren einzusetzen.

Die erfindungsgemäßen Zusammensetzungen werden bei der Emulsionspolymerisation vorzugsweise in der Form von Tensidkonzentraten als Emulgatoren in einer Menge von 0,5 bis 10 Gew.-%, vorzugsweise von 1 bis 5 Gew.-% und insbesondere von 1 bis 3 Gew.-% - berechnet als Tensidkonzentrat und bezogen auf die Polymerisationsmischung - eingesetzt.

Ein weiterer Gegenstand der Erfindung ist ein gießbares, flüssiges Tensidkonzentrat, gekennzeichnet durch einen Gehalt von 50 bis 90 Gew.-% an den oben genannten erfmdungsgemäßen Zusammensetzungen und 10 bis 50 Gew.-% Wasser.

Die erfindungsgemäßen gießbaren, flüssigen Tensidkonzentrate bestehen aus Tensidmischung und Wasser. Die Tensidmischung ist im erfindungsgemäßen Tensidkonzentrat in Mengen von 50 bis 90 Gew.-%, vorzugsweise in Mengen von 60 bis 90 Gew.-% - bezogen auf das gesamte Tensidkonzentrat - enthalten.

Die erfindungsgemäßen Tensidkonzentrate sind über weite Temperaturbereiche flüssig und gießbar. Insbesondere sind die Tensidkonzentrate bei 20 °C flüssig und gießbar. Die untere Grenze des Temperaturbereiches, bei dem die erfindungsgemäßen Tensidkonzentrate noch flüssig und gießbar sind, variiert mit ihrer Zusammensetzung. Prinzipiell kann man sagen, daß die erfindungsgemäßen Tensidkonzentrate über ihren Erstarrungspunkten und vorzugsweise etwa 3 °C über ihren Erstarrungspunkten gießbar sind. Die erfindungsgemäßen Tensidkonzentrate zeigen Viskositätswerte nach Höppler bei 20 °C (DIN 53015) im Bereich von 0,1 bis 3 Pas.

Die erfindungsgemäßen Zusammensetzungen eignen sich generell zur Verwendung als Emulgatoren bei der Herstellung wäßriger Latices, worunter wäßrige Emulsionen oder Dispersionen von Polymeren und/oder Copolymeren verstanden werden, die üblicherweise auf dem Wege der Emulsionspolymerisation zugänglich sind. Die Natur der Polymeren und Copolymeren in diesen wäßrigen Latices unterliegt an sich keinen besonderen Beschränkungen. Besonders bevorzugt sind jedoch Polymere bzw. Copolymere auf Basis folgender Monomer-Bausteine:
Acrylsäure, Acrylsäureester, Butadien, Methacrylsäure, Methacrylsäureester, Styrol, Vinylacetat und Versaticsäurevinylester.

Die erfindungsgemäßen Zusammensetzungen verleihen wäßrigen Latices insbesondere eine exzellente Gefrier-Tau-Stabilität und Elektrolytstabilität. Weiterhin bewirken sie, daß aus diesen Latices hergestellte Kunststoff-Filme sich durch gute Blockfestigkeit auszeichnen.

Ein weiterer Gegenstand der Erfindung ist die Verwendung der genannten erfindungsgemäßen Zusammensetzungen zur Herstellung wäßriger Latices mit verbesserter **Gefrier-Tau-Stabilität.** Die Gefrier-Tau-Stabilität ist ein dem Fachmann einschlägig bekannter Parameter. Das Prinzip der Bestimmung der Gefrier-Tau-Stabilität kann der Norm ISO 1147 entnommen werden. Die Bestimmung der Gefrier-Tau-Stabilität wäßriger Latices, geschieht nach ISO 1147 dadurch, daß man wäßrige Latices auf -10 °C abkühlt und für 16 Stunden bei dieser Temperatur hält. Danach erwärmt man auf Raumtemperatur (etwa +20 °C) und hält 8 Stunden bei dieser Temperatur. Anschließend prüft man, ob es zu Koagulatbildung gekommen ist oder nicht. Ist dies nicht der Fall, war also die Latex-Dispersion gegen Koagulatbildung stabil, so wird der beschriebene Cyclus (Abkühlung und Auftauen) wiederholt und erneut auf Koagulatbildung geprüft. Dieser Gefrier-Tau-Cyclus wird so lange wiederholt, bis entweder Koagulatbildung beobachtet wird oder ein Maximum von 5 Cyclen ohne Koagulatbildung erreicht wird.

Im Rahmen der vorliegenden Erfindung wird die Gefrier-Tau-Stabilität nach der aus ISO 1147 bekannten Methode bestimmt, wobei die Gefrierphasen der Cyclen jedoch bei -25 °C (und nicht bei -10 °C) durchgeführt wurden. Dies sind strengere Testbedingungen als gemäß einer "wörtlichen" Durchführung der ISO 1147. Bei der Bestimmung der Gefrier-Tau-Stabilität werden die wäßrigen Latices vorzugsweise in Mengen im Bereich von 50 bis 100 g eingesetzt.

Ein weiterer Gegenstand der Erfindung ist die Verwendung der genannten erfindungsgemäßen Zusammensetzungen zur Herstellung wäßriger Latices mit verbesserter **Elektrolytstabilität.** Unter "Elektrolytstabilität" wird im Rahmen der vorliegenden Erfindung verstanden, daß eine Polymerdispersion bei Zusatz von 1 Gew.-%-igen bzw. 10 Gew.-%-igen wässerigen Lösungen anorganischer Salze dreiwertiger Kationen (z.B. Al₂(SO4)₃ ) im Volumenverhältnis 50:50 (Polymerdispersion : Salzlösung) nicht koaguliert. Unter Koagulieren versteht man in diesem Zusammenhang das Agglomerisieren von nicht ausreichend stabilisierten Latexteilchen zu Koagulat. Die Koagulatbildung wird hierbei visuell beurteilt.

Ein weiterer Gegenstand der Erfindung ist ein Verfahren zur Herstellung von Kunststoff-Filmen mit verbesserter **Blockfestigkeit,** wobei man in üblicher Weise wäßrige Latices in dünner Schicht ausbreitet und anschließend trocknet, dadurch gekennzeichnet, daß man wäßrige Latices einsetzt, bei deren Herstellung als Emulgatoren Zusammensetzungen nach Anspruch 1 eingesetzt wurden, die erhältlich sind durch Umsetzung eines Gemisches von
a) 20-80 Gew.-% ein oder mehrerer Fettalkohole mit 8 bis 22 C-Atomen und
b) 20-80 Gew.-% ein oder mehrerer Ringöffnungsprodukte von 1,2-Epoxyalkanen mit 8 bis 18 C-Atomen mit Ethylenglykol
mit Ethylenoxid, mit der Maßgabe, daß die Menge des eingesetzten Ethylenoxids 5 bis 100 mol bezogen auf ein mol an freien OH-Gruppen, die in der Summe der eingesetzten Verbindungen a) und b) vorhanden sind, beträgt.

Unter "Blockfestigkeit" wird im Rahmen der vorliegenden Erfindung verstanden, daß getrocknete Kunststoff-Filme bzw. Beschichtungen bei Druckbelastung und/oder unter Temperatureinfluß nicht zum Kleben neigen. Dies ist von Bedeutung insbesondere für Anwendungen im Bereich von Farben-, Textil-, Papier- und Lederbeschichtungen.

Die Blockfestigkeit wird nach folgender Methode bestimmt: Mit einem Ziehlineal wird ein Nassfilm von 200 µm Schichtdicke auf einer PVC-Folie blasenfrei ausgezogen. Die Filme werden 48 Stunden an der Luft getrocknet. Zur Überprüfung der Blockfestigkeit wird ein quadratisch zugeschnittenes Stück Filterpapier der Größe 36 x 36 mm (z.B. Filterpapier der Fa. Schleicher & Schuell, Ref.No. 10312209 oder 300009) zwischen zwei entsprechend großen Kunststoffbeschichteten PVC-Folien (36 x 36 mm) gelegt, so daß die Beschichtungen Kontakt zum Filterpapier haben. Diese Anordnung wird für 1 Minute mit 38 mN/mm² belastet. Vor Versuchsdurchführung werden sowohl Filterpapier, Metallgewicht und Polymerfilm 30 Minuten bei 50 °C in einem Ofen temperiert. Nach der Einwirkzeit von 1 Minute wird das Filterpapier vom Polymerfilm abgenommen und die auf dem Polymerfilm verbliebenen Filterreste als kontaminierte Fläche in Flächenprozent bestimmt, d.h. man bestimmt, wieviel Prozent der Fläche der Kunststoffbeschichteten PVC-Folien Papierfilterreste aufweisen.

Die Herstellung von Kunststoff-Filmen aus wäßrigen Latices geschieht auf an sich übliche Weise. Hierbei breitet man wäßrige Latices in dünner Schicht aus und unterwirft diese Schicht anschließend einer Trocknung. Die Ausbreitung der Schicht geschieht üblicherweise auf eine feste Oberfläche, beispielsweise durch Rakeln. Typischerweise stellt man dabei Schichtdicken im Bereich von 100 bis 2000 µm ein. Außer durch Rakeln kann die Schicht jedoch auch durch andere übliche Methoden erfolgen, beispielsweise auch durch Spritz-, Streich- und Tauchverfahren.

In einer Ausführungsform setzt man den wäßrigen Latices vor dem Ausbreiten Additive zu, wie sie üblicherweise zu Beschichtungszwecken eingesetzt werden, beispielsweise anorg. und organische Pigmente, Füllstoffe wie Carbonate, Siliziumdioxid, Kieselsäuren, Silikate und Sulfate.

Ein weiterer Gegenstand der Erfindung ist die **Verwendung** der genannten erfindungsgemäßen Zusammensetzungen zur Herstellung von blockfesten Kunststoff-Filmen. Im Rahmen dieser Verwendung werden unter Zuhilfenahme der erfindungsgemäßen Zusammensetzungen zunächst wäßrige Latices durch Emulsionspolymerisation hergestellt und diese wäßrigen Latices in dünner Schicht ausgebreitet und anschließend einer Trocknung unterworfen.

### Beispiele

### Eingesetzte Substanzen

| | |
|---|---|
| Lorol spezial Epicol G 24 | C_{12/14}-Fettalkoholgemisch (Fa. Cognis Deutschland GmbH) 1,2-Epoxy-C_{12/14}-Alkangemisches (67% C₁₂ und 33% C₁₄) (Fa. Cognis Deutschland GmbH) |
| C_{12/14}(30EO)sulfat | Natriumsalz eines Sulfatierungsproduktes eines Anlagerungsproduktes von 30 mol Ethylenoxid an 1 mol Lorol spezial |

### Herstellung der Verbindungen und Prüfungen

### Beispiel 1

135 g eines C_{12/14}-Fettalkoholgemisches wurden mit 85 g eines Anlagerungsproduktes von 1 mol Ethylenglykol an 1 mol eines 1,2-Epoxy-C_{12/14}-Alkangemisches (67% C₁₂ und 33% C₁₄) gemischt. Diese Mischung wurde mit 550 g Ethylenoxid versetzt und bei 180 °C in Gegenwart von 1 g des Katalysators Na-Methylat 150 Minuten erhitzt.

### Vergleichsbeispiel 1

a) 195 g eines C_{12/14}-Fettalkoholgemisches wurde mit 440 g Ethylenoxid versetzt und bei 180 °C in Gegenwart von 1 g des Katalysators Na-Methylat für 150 Minuten erhitzt.
b) 290 g eines Anlagerungsproduktes von 1 mol Ethylenglykol an 1 mol eines 1,2-Epoxy-C_{12/14}-Alkangemisches (67% C₁₂ und 33% C₁₄) gemischt wurde mit 440 g Ethylenoxid versetzt und bei 180 °C in Gegenwart von 1 g des Katalysators Na-Methylat 150 Minuten erhitzt.
c) Die gemäß a) und b) erhaltenen Produkte wurden miteinander vermischt.

### Beispiel 2

135 g eines C_{12/14}-Fettalkoholgemisches wurden mit 85 g eines Anlagerungsproduktes von 1 mol Ethylenglykol an 1 mol eines 1,2-Epoxy-C_{12/14}-Alkangemisches (67% C₁₂ und 33% C₁₄) gemischt. Diese Mischung wurde mit 1650 g Ethylenoxid versetzt und bei 180 °C in Gegenwart von 1,5 g des Katalysators Na-Methylat für 150 Minuten erhitzt.

### Vergleichsbeispiel 2

a) 80 g eines C_{12/14}-Fettalkoholgemisches wurde mit 550 g Ethylenoxid versetzt und bei 180 °C in Gegenwart von 1 g des Katalysators Na-Methylat für 150 Minuten erhitzt.
b) 290 g eines Anlagerungsproduktes von 1 mol Ethylenglykol an 1 mol eines 1,2-Epoxy-C_{12/14}-Alkangemisches (67% C₁₂ und 33% C₁₄) gemischt wurde mit 440 g Ethylenoxid versetzt und bei 180 °C in Gegenwart von 1 g des Katalysators Natrium-Methylat für 150 Minuten erhitzt.
c) Die gemäß a) und b) erhaltenen Produkte wurden miteinander vermischt.

### Beispiel 3

135 g eines C_{12/14}-Fettalkoholgemisches wurden mit 85 g eines Anlagerungsproduktes von 1 mol Ethylenglykol an 1 mol eines 1,2-Epoxy-C_{12/14}-Alkangemisches (67% C₁₂ und 33% C₁₄) gemischt. Diese Mischung wurde mit 2195 g Ethylenoxid versetzt und bei 180 °C in Gegenwart von 2 g des Katalysators Na-Methylat 150 Minuten erhitzt.

### Vergleichsbeispiel 3

a) 62 g eines C_{12/14}-Fettalkoholgemisches wurde mit 568 g Ethylenoxid versetzt und bei 180 °C in Gegenwart von 1 g des Katalysators Na-Methylat für 150 Minuten erhitzt.
b) 290 g eines Anlagerungsproduktes von 1 mol Ethylenglykol an 1 mol eines 1,2-Epoxy-C_{12/14}-Alkangemisches (67% C₁₂ und 33% C₁₄) gemischt wurde mit 440 g Ethylenoxid versetzt und bei 180 °C in Gegenwart von 1 g des Katalysators Na-Methylat für 150 Minuten erhitzt.
c) Die gemäß a) und b) erhaltenen Produkte wurden miteinander vermischt.

### Biologische Abaubarkeit

Die Produkte gemäß Beispiel 1 und Vergleichsbeispiel 1c) wurden hinsichtlich ihrer biologischen Abbaubarkeit geprüft. Es zeigte sich, daß das erfindungsgemäße Produkt gemäß Beispiel 1 nach dem OECD-Screening-Test das Prädikat "readily biodegradable" erhielt, dem Produkt gemäß Vergleichsbeispiel 1c) jedoch lediglich das Prädikat "well biodegradable" zuzuordnen war.

### Herstellung von wäßrigen Konzentraten

Die Zusammensetzung gemäß den erfindungsgemäßen Beispielen 1 und 2 ließen sich ohne weiteres in Wasser bei 20 °C flüssigen und gießbaren Tensidkonzentraten formulieren. Dabei konnten problemlos flüssige und gießfähige Konzentrate mit einem Gehalt von 50 - 90 Gew.-% an den Zusammensetzung gemäß den Beispielen 1 und 2 hergestellt werden.

### Anwendungstechnische Untersuchungen

### Koagulatbildung

Zur Prüfung der Koagulatbildung beim Einsatz der Zusammensetzung gemäß den Beispielen 1 und 2 wurde wie folgt verfahren: Als Monomere wurden 140,0 g Ethylacrylat, 140,0 g Methylmethacrylat, 52,5 g Butylacrylat sowie Acrylsäure eingesetzt. Zunächst wurden 10 Gew.-% der jeweiligen Monomere in etwa 600 g vollentionisiertem Wasser emulgiert, mit jeweils 2,0 g Natriumlaurylsulfat und Kaliumperoxodisulfat versetzt auf 80°C erwärmt. Nach Polymerisationsstart wurden 10 g der Zusammensetzung gemäß Beispiel 1 (alternativ: gemäß Beispiel 2) und die restlichen 90% der Monomeren zu der vorgelegten Mischung zugegeben. Nach der Reaktionszeit von etwa 2,5 Stunden wurde die Polymerdispersion abgekühlt und mittels eines Filters mit einer Maschenweite von 80 µm filtriert. Die Menge an Feststoff, die im Filter verbleibt, der Koagulatgehalt, wurde in Gew.-% an Feststoff - bezogen auf den Feststoffgehalt der Polymerdispersion - bestimmt. Der Koagulatgehalt lag dabei sowohl beim Einsatz der Zusammensetzung gemäß Beispiel 1 als auch beim Einsatz der Zusammensetzung gemäß Beispiel 2 unterhalb von 0,5%. Dies bedeutet, daß die erfindungsgemäßen, biologisch gut abbaubaren Zusammensetzungen sich ausgezeichnet als Emulgatoren für die Emulsionspolymerisation eignen, also die gute Abbaubarkeit ohne nachteilige Wirkungen für die anwendungstechnischen Eigenschaften ist.

### Lagerstabilität

Zur Prüfung der Lagerstabilität wurde wie folgt verfahren: Zunächst wurde ein Styrol-Acrylat-Latex hergestellt, wobei folgende Monomere zum Einsatz kamen: Styrol, Butylacrylat, Acrylsäure und Acrylamid und zwar im Gewichtsverhältnis 48,3 : 48,3 : 2,3 : 1,1. Im einzelnen geschah die Herstellung der wäßrigen Polymerdispersion wie folgt:
Als Monomere wurden 241,5 g Styrol, 241,5 g Butylacrylat, 11,5 g Acrylsäure und 5,5 g Acrylamid eingesetzt. Die Monomeren wurden mit 225 g vollentionisiertem Wasser, 4,3g C₁₂(30EO)sulfat und 1,2g nichtionischem Emulgator gemäß Beispiel 2 (bzw. Vergleichsbeispiel 2c) voremulgiert. 10 Vol% dieser Preemulsion wurden zu einer Reaktorvorlage dosiert, bestehend aus 174 g vollentsalztem Wasser, 3,9 g C₁₂(30EO)sulfat, 0,35 g nichtionischem Emulgator gemäß Beispiel 2 (bzw. Vergleichsbeispiel 2c) und Kaliumperoxodisulfat. Anschließend wurde auf 90 °C erhitzt und die Polymerisationsreaktion gestartet. Kontinuierlich erfolgte die Dosierung der verbliebenen 90 Vol% der Preemulsion und der Initatorlösung bestehend aus 72,8 g vollentionisierten Wasser und 2,2 g Kaliumperoxodisulfat innerhalb von 3 Stunden. Nach einer weiteren Stunde Reaktionszeit wurde abgekühlt und nach Neutralisation mit 25 %-igem Ammoniak filtriert.

Die Beurteilung der Lagerstabilität erfolgte nach 4 Wochen Lagerung bei 50 °C Lagertemperatur. Eine Polymerdispersion gilt dann als stabil, wenn sie nach der genannten Lagerperiode keine Koagulation, Sedimentation oder Inhomogenität aufweist. Die Auswertung erfolgte visuell.
Die unter Verwendung des nichtionischen Emulgators gemäß Beispiel 2 hergestellte Polymerdispersion zeigte nach 4 Wochen Lagerung bei 50 °C keine der aufgeführten Instabilitäten. Hingegen war der unter Verwendung des nichtionischen Emulgators gemäß Vergleichsbeispiel 2c) hergestellte Latex nicht ausreichend stabil und zeigte Koagulatbildung.

### Gefrier-Tau-Stabilität

Neben den Lagereigenschaften des beschriebenen Styrol-Acrylat-Latex wurden die Polymerdispersionen auch auf ihr Gefrier-Tau-Verhalten beurteilt. Die Gefrier-Tau-Stabilität wurde wie bereits oben angegeben durchgeführt, also nach der aus ISO 1147 bekannten Methode, wobei die Gefrierphasen der Cyclen jedoch bei -25 °C (und nicht bei -10 °C) durchgeführt wurden. Hierbei zeigte sich, dass die unter Verwendung des nichtionischen Emulgators aus Beispiel 2 hergestellte Polymerdispersion bei einer Temperatur von ― 25 °C stabil war. Hingegen war die Stabilität des Styrol-Acrylat-Latex, der unter Verwendung des nichtionischen Emulgators aus Vergleichsbeispiel 2c) hergestellt worden war, bei - 25 °C nicht mehr gegeben.

### Wasserbeständigkeit

Zur Prüfung der Wasserbeständigkeit von aus den Latices hergestellten Polymerfilmen wurde wie folgt verfahren: Zur Herstellung der zu prüfenden Polymerfilme wurde mit einem Rakel ein 100 µm Nassfilm (12 x 75 mm) auf einen Glasobjektträger aufgetragen. Zur Trocknung der Nassfilme wurden die Prüflinge 72 Stunden, auf einer horizontal nivellierten Fläche bei Raumtemperatur (23°C) getrocknet. Nach beendeter Trocknung folgte eine Lagerung der Prüflinge bis zu 48 Stunden in Leitungswasser. Zur Auswertung wurden die Polymerfilme visuell auf Veränderungen beurteilt. Die Bewertung wurde nach einer Bewertungsskala mit Werten von 0 - 5 durchgeführt. Hierbei ist die Bedeutung der Extremwerte 0 und 5 wie folgt definiert:
- 0 = klarer Film / unverändert
- 5 = weiß angelaufen
Bei der Auswertung wurden keine Unterschiede zwischen Polymerfilmen, hergestellt aus Latices auf Basis des nichtionischen Emulgators aus Beispiel 2 bzw. Vergleichsbeispiel 2c, festgestellt. Nach beendeter Lagerung wurden beide Filme mit der Benotung 2 (= leicht trüber Film) eingestuft.

### Elektrolytbeständigkeit

Zur Prüfung der Elektrolytbeständigkeit wurde wie folgt verfahren: Zunächst wurde ein Vinylacetat-Acrylat-Latex hergestellt, wobei folgende Monomere zum Einsatz kamen: Vinylacetat, Versaticsäurevinylester, Butylacrylat und Acrylsäure und zwar im Gewichtsverhältnis 69,7 : 19,9 : 9,9 : 0,5. Im einzelnen geschah die Herstellung der wäßrigen Polymerdispersion wie folgt:
1,0g Dodecylbenzolsulfonat-, Na-Salz (25 %-ige wässerige Lösung) und 0,5 g Kaliumperoxodisulfat wurden in 219,0 g vollentionisiertem Wasser gelöst und im Reaktor vorgelegt und auf 65 °C aufgeheizt. Bei dieser Temperatur wurden 2,5 Vol-% einer Preemulsion bestehend aus 203,5 g vollentionisiertem Wasser, 18,9 g Dodecylbenzolsulfonat-, Na-Salz (25 %-ige wässerige Lösung, 0,5 g Kaliumcarbonat, 350,0 g Vinylacetat, 100,0g Versaticsäurevinylester, 50,0 g Butylacrylat, 2,5 g Acryl-säurere und 10,0 g nichtionischer Emulgator gemäß Beispiel 2 bzw. Beispiel 3, zudosiert. Nach Polymerisationsstart wurde die restliche Preemulsion (97,5 Vol-%) ausgehend von einer Raktionstemperatur von 80 °C über einen Zeitraum von 3 Stunden kontinuierlich gemeinsam mit einer Initiatorlösung bestehend aus 60,0 g vollentionisiertes Wasser und 0,5 g Kaliumperoxodisulfat zudosiert. Die Dosierung der Initiatorlösung wurde so gewählt, dass die. Zugabe etwa 15 Minuten länger dauerte, als die Dosierung der Preemulsion. Nach einer weiteren Nachpolymerisationszeit von 2 Stunden wurde auf eine Temperatur unterhalb von 30 °C gekühlt, filtriert und ein pH-Wert von 7 - 8 durch Zugabe von 7 %iger Natronlauge eingestellt.

Die so hergestellten Vinylacetat-Copolymer-Dispersionen wurden auf Elektrolytbeständigkeiten geprüft. Zur Versuchsdurchführung wurden 10 ml der zu prüfenden Polymerdispersion mit 10 ml der jeweiligen Aluminiumsulfat-Lösung versetzt. Die bereits oben geschilderte Methode beruht darauf, daß sich anorganische Salze mit 3-wertigen Kationen deutlich kritischer als 2-wertige Kationen verhalten. Sofern beim Test auf Elektrolytbeständigkeit kein Koagulat gebildet wird, gilt der Test als bestanden.
Vinylacetat-Copolymer-Dispersion unter Verwendung der nichtionischen Emulgatoren gemäß Beispiel 2 und Beispiel 3 zeigten keine Koagulatbildung bei Zusatz von wässerigen 1- bzw. 10 %-igen Aluminiumsulfatlösungen. Die Dispersion hergestellt mit dem nichtionischen Emulgator gemäß Vergleichsbeispiel 2c erfüllte diese Forderung nicht.

### Blockfestigkeit

Die Blockfestigkeit von aus den Latices hergestellten Polymerfilmen wurde nach folgender Methode bestimmt: Mit einem Ziehlineal wurde zunächst ein Nassfilm von 200 µm Schichtdicke auf einer PVC-Folie blasenfrei ausgezogen. Die Filme wurden 48 Stunden an der Luft getrocknet, so daß eine Kunststoff-beschichtete PVC-Folie erhalten wurde. Zur Überprüfung der Blockfestigkeit wurde ein quadratisch zugeschnittenes Stück Filterpapier der Größe 36 x 36 mm (Filterpapier der Fa. Schleicher & Schuell, Ref.No. 10312209) zwischen zwei der wie gerade beschrieben erhaltenen Kunststoff-beschichtete PVC-Folien (36 x 36 mm) gelegt, so daß die Beschichtungen Kontakt zum Filterpapier hatten. Diese Anordnung wurde für 1 Minute mit 38 mN/mm² belastet. Vor Versuchsdurchführung wurden sowohl Filterpapier, Metallgewicht und Polymerfilm 30 Minuten bei 50 °C in einem Ofen temperiert. Nach der Einwirkzeit von 1 Minute wurde das Filterpapier vom Polymerfilm abgenommen und die auf dem Polymerfilm verbliebenen Filterreste als kontaminierte Fläche in Flächenprozent bestimmt, d.h. es wurde bestimmt, wieviel Prozent der Fläche, der mit dem Polymerfilm beschichteten PVC-Folien, Papierfilterreste aufwiesen.
Die Polymerfilme auf Basis der beschriebenen Vinylacetat-Acrylat-Dispersion, hergestellt mit nichtionischen Emulgatoren gemäß den Beispielen 2 und 3 führten nur zu sehr geringer Kontamination: Beim Einsatz eines nichtionischen Emulgators nach Beispiel 2 betrug der kontaminierte Flächenanteil nur 0,4 % und beim Einsatz eines nichtionischen Emulgators nach Beispiel 3 sogar nur 0,2 %. Bei Einsatz der nichtionischen Emulgatoren gemäß den Vergleichsbeispielen 2 und 3 war jedoch mit 4,8 % bzw. 1,2 % eine erheblich größere Flächenkontamination festzustellen.

## Patentansprüche

1. Biologisch abbaubare Zusammensetzungen, die erhältlich sind durch Umsetzung eines Gemisches von
a) 20-80 Gew.-% ein oder mehrerer Fettalkohole mit 8 bis 22 C-Atomen und
b) 20-80 Gew.-% ein oder mehrerer Ringöffnungsprodukte von 1,2-Epoxyalkanen mit 8 bis 18 C-Atomen mit Ethylenglykol
mit Ethylenoxid, mit der Maßgabe, daß die Menge des eingesetzten Ethylenoxids 5 bis 100 mol bezogen auf ein mol an freien OH-Gruppen, die in der Summe der eingesetzten Verbindungen a) und b) vorhanden sind, beträgt.

2. Bei 20 °C flüssige, gießfähige Tensidkonzentrate enthaltend
• 50 bis 90 Gew.-% einer Zusammensetzung gemäß Anspruch 1 und
• 10 bis 50 Gew.-%. Wasser.

3. Verfahren zur Herstellung von biologisch abbaubaren Zusammensetzungen, indem man ein Gemisch von
a) 20-80 Gew.-% ein oder mehrerer Fettalkohole mit 8 bis 22 C-Atomen und
b) 20-80 Gew.-% ein oder mehrerer Ringöffnungsprodukte von 1,2-Epoxyalkanen mit 8 bis 18 C-Atomen mit Ethylenglykol
mit Ethylenoxid umsetzt, mit der Maßgabe, daß die Menge des eingesetzten Ethylenoxids 5 bis 100 mol bezogen auf ein mol an freien OH-Gruppen, die in der Summe der eingesetzten Verbindungen a) und b) vorhanden sind, beträgt.

4. Verwendung von Zusammensetzungen gemäß Anspruch 1 als Emulgatoren bei der Emulsionspolymerisation.

5. Verwendung von Zusammensetzungen gemäß Anspruch 1, zur Herstellung wäßriger Latices mit verbesserter Gefrier-Tau-Stabilität.

6. Verwendung von Zusammensetzungen gemäß Anspruch 1, zur Herstellung wäßriger Latices mit verbesserter Elektrolytstabilität.

7. Verfahren zur Herstellung von Kunststoff-Filmen mit verbesserter Blockfestigkeit, wobei man in üblicher Weise wäßrige Latices in dünner Schicht ausbreitet und anschließend trocknet, **dadurch gekennzeichnet, daß** man wäßrige Latices einsetzt, bei deren Herstellung als Emulgatoren Zusammensetzungen nach Anspruch 1 eingesetzt wurden.

8. Verwendung von Zusammensetzungen gemäß Anspruch 1 zur Herstellung von blockfesten Kunststoff-Filmen.

## Claims

1. Biodegradable compositions obtainable by reacting a mixture of
a) 20 to 80% by weight of one or more C₈₋₂₂ fatty alcohols and
b) 20 to 80% by weight of one or more ring opening products of C₈₋₁₈ 1,2-epoxyalkanes with ethylene glycol,
with ethylene oxide, with the proviso that the ethylene oxide is used in a quantity of 5 to 100 mol per mol of free OH groups present in the sum total of compounds a) and b) used.

2. Surfactant concentrates liquid and pourable at 20°C containing
• 50 to 90% by weight of the composition claimed in claim 1 and
• 10 to 50% by weight water.

3. A process for the production of biodegradable compositions, **characterized in that** a mixture of
a) 20 to 80% by weight of one or more C₈₋₂₂ fatty alcohols and
b) 20 to 80% by weight of one or more ring opening products of C₈₋₁₈ 1,2-epoxyalkanes with ethylene glycol,
is reacted with ethylene oxide, with the proviso that the ethylene oxide is used in a quantity of 5 to 100 mol per mol of free OH groups present in the sum total of compounds a) and b) used.

4. The use of the compositions claimed in claim 1 as emulsifiers in emulsion polymerization.

5. The use of the compositions claimed in claim 1 for the production of aqueous latices having improved freeze/thaw stability.

6. The use of the compositions claimed in claim 1 for the production of aqueous latices having improved electrolyte stability.

7. A process for the production of plastic films having improved blocking resistance, aqueous latices being spread out in a thin layer and then dried in the usual manner, **characterized in that** aqueous latices produced using the compositions claimed in claim 1 as emulsifiers are used.

8. The use of the compositions claimed in claim 1 for the production of non-blocking plastic films.

## Revendications

1. Compositions biodégradables que l'on peut obtenir par réaction d'un mélange de
a) 20 à 80 % en poids d'un ou plusieurs alcools gras comportant de 8 à 22 atomes de carbone et
b) 20 à 80 % en poids d'un ou plusieurs produits d'ouverture de cycle de 1,2-époxyalcanes comportant de 8 à 18 atomes de carbone avec de l'éthylèneglycol,
avec de l'oxyde d'éthylène, étant précisé que la quantité d'oxyde d'éthylène utilisée s'élève à de 5 à 100 moles pour une mole de groupes OH libres présents dans la somme des composés a) et b) utilisés.

2. Concentrés d'agents tensioactifs coulables, liquides à 20°C, contenant
- 50 à 90 % en poids d'une composition selon la revendication 1 et
- 10 à 50 % en poids d'eau.

3. Procédé de préparation de compositions biodégradables, selon lequel on fait réagir un mélange de
a) 20 à 80 % en poids d'un ou plusieurs alcools gras comportant de 8 à 22 atomes de carbone et
b) 20 à 80 % en poids d'un ou plusieurs produits d'ouverture de cycle de 1,2-époxyalcanes comportant de 8 à 18 atomes de carbone avec de l'éthylèneglycol,
avec de l'oxyde d'éthylène, étant précisé que la quantité d'oxyde d'éthylène utilisée s'élève à 5 à 100 moles pour une mole de groupes OH libres présents dans la somme des composés a) et b) utilisés.

4. Utilisation de compositions selon la revendication 1, comme émulsifiants dans la polymérisation en émulsion.

5. Utilisation de compositions selon la revendication 1, pour la préparation de latex aqueux de stabilité améliorée à la congélation et à la décongélation.

6. Utilisation de compositions selon la revendication 1, pour la préparation de latex aqueux de stabilité améliorée vis-à-vis des électrolytes.

7. Procédé de préparation de pellicules de matière synthétique à résistance améliorée à l'adhérence de contact, selon lequel on étale de manière habituelle des latex aqueux en couche mince puis on les sèche,
**caractérisé en ce qu'**
on utilise des latex aqueux dans la préparation desquels on a employé comme émulsifiants des compositions selon la revendication 1.

8. Utilisation de compositions selon la revendication 1, pour la préparation de pellicules de matière synthétique résistantes à l'adhérence par contact.
